# EUROPEAN PATENT SPECIFICATION

(11) **EP 2 796 623 B1**
(45) Date of publication and mention of the grant of the patent: **15.03.2017**
(21) Application number: 11878010.5
(22) Date of filing: 21.12.2011
(51) Int. Cl.: E02F 9/20, E02F 3/42, G05B 15/02, G06F 3/03, E02F 9/26, G06F 3/038

(54) **APPARATUS FOR SETTING DEGREE OF CONTROLLABILITY FOR CONSTRUCTION EQUIPMENT**
VORRICHTUNG ZUR EINSTELLUNG DES STEUERBARKEITSGRADES FÜR BAUMASCHINEN
APPAREIL POUR ÉTABLIR UN DEGRÉ D'APTITUDE À LA COMMANDE POUR UN ENGIN DE CHANTIER

(43) Date of publication of application: 29.10.2014
(73) Proprietor: Volvo Construction Equipment AB, 631 85 Eskilstuna (SE)
(72) Inventor: RYU, Jae-Heon, Busan 617-762 (KR)
(74) Representative: Hersina, Günter
(86) International application number: PCT/KR2011/009941
(87) International publication number: WO 2013/094789

(56) References cited:
- EP-A1- 0 810 497
- EP-A1- 1 106 741
- EP-A1- 1 584 755
- EP-A1- 2 269 894
- JP-A- H06 346 490
- JP-A- H11 229 444
- JP-A- 2002 121 772
- KR-B1- 100 621 981

## Description

### TECHNICAL FIELD

The present invention relates to an apparatus for setting an operational sensitivity for construction equipment. More particularly, the present invention relates to an apparatus for setting an operational sensitivity for construction equipment, which is so configured that a user can set the operational sensitivity according to an operation section of a proportional control operation device in the case where a proportional control type driving device is controlled using a proportional control type input device in the construction equipment, and thus the user can change the setting of the operational sensitivity according to an object mounted on the driving device or working conditions to improve the operation performance and to seek operator's convenience.

### BACKGROUND ART

In the case of construction machine equipment in the related art, since a user uses an operational sensitivity that is set by a manufacturer, the range of setting is limited depending on an operation device and work to be done, and there is no way for an operator to additionally change or improve the operational sensitivity.

In particular, in the case where a precise control of an initial operation section is required according to an option device, the operation should be performed through the preset operational sensitivity in the equipment, and thus the operator should precisely control the input device to achieve a fine operation thereof.

EP 2 269 894 A1 discloses a steering controller, in which steering sensitivity is decreased in a stationary steering operation. A stationary steering operation determination means makes a decision whether the stationary steering operation is to be performed on the basis of the vehicle speed and the steering angle.

EP 1 106 741 A1 teaches to store interlocking relationships between operating levers and actuators in a service tool. Interlocking relationships desired by an operator are input into a control unit of a construction machine by coupling the control unit to the service tool, inputting the interlocking relationships and storing the interlocking relationships in a memory of the control unit. Thus, the volume of the memory in the control unit can be reduced.

### DISCLOSURE

### TECHNICAL PROBLEM

Therefore, the present invention has been made to solve the above-mentioned problems occurring in the related art, and one subject to be achieved by the present invention is to provide an apparatus for setting an operational sensitivity for construction equipment, which is so configured that a user can set the operational sensitivity of an electrical operation and a driving device of the construction equipment, and thus the user can change the setting of the operational sensitivity according to an operation purpose or an attached device to improve the operability of the equipment and to seek operator's convenience.

### TECHNICAL SOLUTION

In accordance with an aspect of the present invention, an apparatus for setting an operational sensitivity for construction equipment includes an operation amount detection means for detecting an operation amount of an operation lever; a control unit receiving the operation amount detected by the operation amount detection means and calculating a drive amount according to a relationship between a pre-stored operation amount and the drive amount (or "operational sensitivity" in another word); an actuator operating according to the drive amount calculated by the control unit; and an input unit setting or changing the relationship between the operation amount and the drive amount stored in the control unit according to a user's key operation.

Preferably, the apparatus for setting an operational sensitivity according to the aspect of the present invention may further include a display unit displaying the relationship between the operation amount and the drive amount on a screen in response to a request according to the user's key operation.

The relationship between the operation amount and the drive amount may be changed by a user through moving a specified point on a line on which the operation amount and the drive amount, which are formed on the display unit, meet each other in the case of changing the relationship between the operation amount and the drive amount.

Preferably, the relationship between the operation amount and the drive amount may be changed by the user through defining the relationship between the operation amount and the drive amount in at least first-order polynomial.

Maximum and minimum drive amounts and operation amounts may be set, and the user may be limited to set the relationship between the operation amount and the drive amount within a set input/output range.

### ADVANTAGEOUS EFFECT

According to the present invention, in the case where the proportional control type driving device is controlled using the proportional control type input device in the construction equipment, the user can set the operational sensitivity according to the operation section of the proportional control operation device, and thus the user can change the setting of the operational sensitivity according to the object mounted on the driving device or working conditions to improve the operation performance and to seek operator's convenience.

That is, since the sensitivity of the proportional operation device can be flexibly set according to the operation section by the user, the operation device can be driven to meet the intention of the operator. In other words, it becomes possible to finely drive the operation device, and the operator's work fatigue can be reduced.

### BRIEF DESCRIPTION OF THE DRAWINGS

The above objects, other features and advantages of the present invention will become more apparent by describing the preferred embodiments thereof with reference to the accompanying drawings, in which:
Fig. 1 is a block diagram illustrating the detailed configuration of an apparatus for setting an operational sensitivity for construction equipment according to an embodiment of the present invention;
Fig. 2 is a flowchart illustrating a method for setting an operational sensitivity, which is performed by a user, according to an embodiment of the present invention;
Fig. 3 is a flowchart illustrating a method for driving an actuator according to a set operational sensitivity according to an embodiment of the present invention; and
Fig. 4 is a graph explaining an input/output relationship for setting of an operational sensitivity according to an embodiment of the present invention.

### * Description of Reference Numerals in the Drawing

- 101:: operation amount detection means
- 102:: control unit
- 103:: actuator
- 104:: input unit
- 105:: display unit

### BEST MODE

Hereinafter, preferred embodiments of the present invention will be described in detail with reference to the accompanying drawings.

The matters defined in the description, such as the detailed construction and elements, are nothing but specific details provided to assist those of ordinary skill in the art in a comprehensive understanding of the invention, and the present invention is not limited to the embodiments disclosed hereinafter.

For an accurate explanation of the present invention, portions that are not related to the explanation are omitted, and in the entire description of the present invention, similar reference numerals are used for the similar elements.

In the entire description and claims of the present invention, the term "comprises" and/or "includes" means that one or more other constituent elements are not excluded in addition to the described constituent elements.

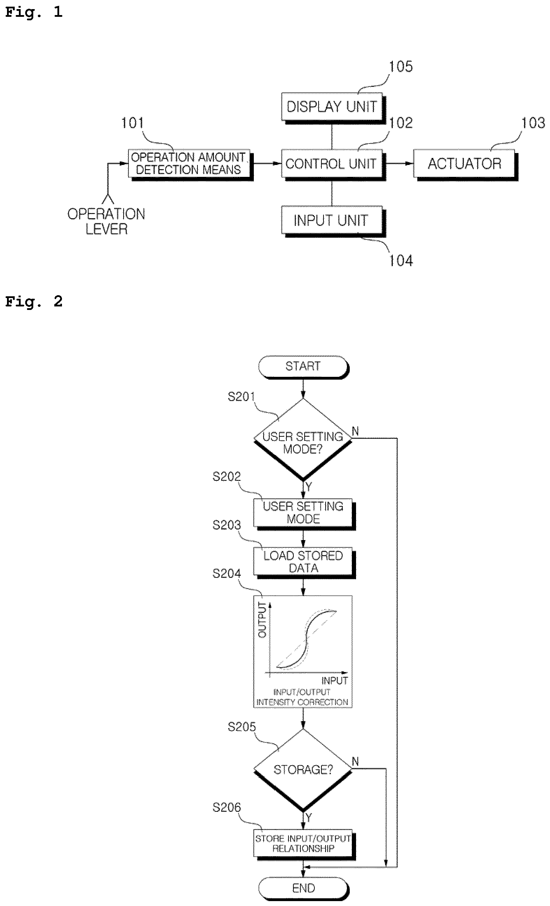

Fig. 1 is a block diagram illustrating the detailed configuration of an apparatus for setting an operational sensitivity for construction equipment according to an embodiment of the present invention.

As illustrated in Fig. 1, an apparatus for setting an operational sensitivity for construction equipment according to an embodiment of the present invention briefly includes an operation amount detection means 101, a control unit 102, an actuator 103, and an input unit 104.

That is, the apparatus for setting an operational sensitivity for construction equipment includes the operation amount detection means 101 for detecting an operation amount of an operation lever, the control unit 102 receiving the operation amount detected by the operation amount detection means 101 and calculating a drive amount according to a relationship between a pre-stored operation amount and the drive amount (or "operational sensitivity" in another word), the actuator 103 operating according to the drive amount calculated by the control unit 102, and the input unit 104 setting or changing the relationship between the operation amount and the drive amount stored in the control unit 102 according to a user's key operation.

The apparatus for setting an operational sensitivity further includes a display unit 105 displaying the relationship between the operation amount and the drive amount on a screen in response to a request according to the user's key operation.

Here, the input unit 104 is connected to the control unit 102 to set or change the relationship between the operation amount and the drive amount (i.e., operational sensitivity) stored in the control unit 102 according to the user's key operation. The change of the relationship between the input operation amount and the drive amount is reflected and displayed on the display unit 105 according to the operation of the input unit 104, and the finally set value is stored in a storage (not illustrated) of the control unit 102 according to a command of the input unit 104. Further, the relationship between the operation amount and the drive amount is changed by the user through moving a specified point on a line on which the operation amount and the drive amount, which are formed on the display unit 105, meet each other in the case of changing the relationship between the operation amount and the drive amount. The relationship between the operation amount and the drive amount can be changed by the user through defining the relationship between the operation amount and the drive amount in at least first-order polynomial. In addition, the maximum and minimum drive amounts and the operation amounts are set, and the user is limited to set the relationship between the operation amount and the drive amount within a set input/output range. That is, the maximum and minimum values of the input operation amounts or the output drive amounts may be set, and the user may be limited to change the relationship between the operation amount and the drive amount within the range.

The control unit 102 receives the operation amount of the operation lever from the operation amount detection means 101, calculates and determines the drive amount by applying the input operation amount to the pre-stored relationship between the operation amount and the drive amount ("operational sensitivity" in another word), and then controls the operation of the actuator 103 according to the determined drive amount. That is, the control unit 102 stores the relationship between the user's operation amount and the drive amount of the actuator 103, and resumes the stored relationship when the actuator 103 is driven. The relationship between the operation amount and the drive amount is set or changed by the user through the input unit 104. That is, corresponding information is input from the input unit 104 and is stored in a specific storage of the control unit 102.

Hereinafter, the operation of the apparatus for setting an operational sensitivity for construction equipment according to an embodiment of the present invention of Fig. 1 will be described.

First, the control unit 102 receives the operation amount of the operation lever from the operation amount detection means 101.

Next, the control unit 102 calculates and determines the drive amount by applying the input operation amount to the pre-stored relationship between the input operation amount and the drive amount ("operational sensitivity" in another word).

Then, the control unit 102 controls the operation of the actuator 103 according to the determined drive amount.

That is, the control unit 102 stores the relationship between the user's operation amount and the drive amount of the actuator 103, and resumes the stored relationship when the actuator 103 is driven.

The relationship between the operation amount and the drive amount is set or changed by the user through the input unit 104. That is, corresponding information is input from the input unit 104 and is stored in a specific storage of the control unit 102.

The input unit 104 is connected to the control unit 102 to set or change the relationship between the operation amount and the drive amount (i.e., operational sensitivity) stored in the control unit 102 according to the user's key operation.

The change of the relationship between the input operation amount and the drive amount is reflected and displayed on the display unit 105 according to the operation of the input unit 104, and the finally set value is stored in a storage (not illustrated) of the control unit 102 according to a command of the input unit 104.

Further, the relationship between the operation amount and the drive amount is changed by the user through moving a specified point on a line on which the operation amount and the drive amount, which are formed on the display unit 105, meet each other in the case of changing the relationship between the operation amount and the drive amount.

The relationship between the operation amount and the drive amount can be changed by the user through defining the relationship between the operation amount and the drive amount in at least first-order polynomial.

In addition, the maximum and minimum drive amounts and the operation amounts are set, and the user is limited to set the relationship between the operation amount and the drive amount within a set input/output range.

That is, the maximum and minimum values of the input operation amounts or the output drive amounts may be set, and the user may be limited to change the relationship between the operation amount and the drive amount within the range.

As described above, according to the present invention, in the case where the proportional control type driving device is controlled using the proportional control type input device in the construction equipment, the user can set the operational sensitivity according to the operation section of the proportional control operation device, and thus the user can change the setting of the operational sensitivity according to the object mounted on the driving device or working conditions to improve the operation performance and to seek operator's convenience.

That is, since the sensitivity of the proportional operation device can be flexibly set according to the operation section by the user, the operation device can be driven to meet the intention of the operator. In other words, it becomes possible to finely drive the operation device, and the operator's work fatigue can be reduced.

Fig. 2 is a flowchart illustrating a method for setting an operational sensitivity, which is performed by a user, according to an embodiment of the present invention.

As illustrated in Fig. 2, according to the present invention, if a user setting mode is entered, the preset input/output relationship, i.e., the relationship between the operation amount and the drive amount (or relationship diagram), is displayed on the display unit, and a user confirms information that is displayed on the display unit and corrects the input/output sensitivity by adjustment through the input unit.

Specifically, it is first determined whether the user desires to enter into the user setting mode (S201), and if it is determined that the user desires to enter into the user setting mode, the input/output relationship that is preset and stored in the storage of the control unit, i.e., the relationship between the operation amount and the drive amount (or relationship diagram), is displayed through the display unit (S202 to S204). In this state, the user confirms information that is displayed on the display unit and corrects the input/output sensitivity by adjustment through the input unit according to the user's desire (S204). If the user desires to store the corrected information, the corresponding information is stored in the specific storage of the control unit according to the user command input through the input unit.

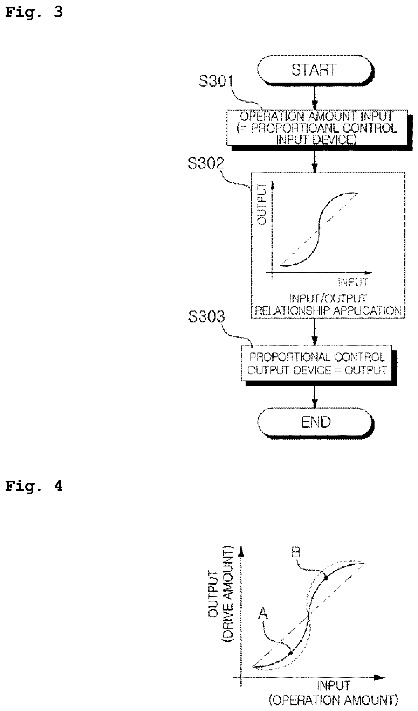

Fig. 3 is a flowchart illustrating a method for driving an actuator according to the set operational sensitivity according to an embodiment of the present invention.

As illustrated in Fig. 3, according to the present invention, the input/output sensitivity diagram set by the user is implemented in at least first-order polynomial in the control unit, and the output amount of the actuator is determined by reflecting the input value according to the user's operation of the operation lever in the input/output sensitivity diagram.

Specifically, the operation amount of the operation lever according to the user's operation is received from the operation amount detection means (S301), and the output drive amount of the actuator is calculated and determined by applying the input operation amount to the input/output sensitivity diagram (or at least first-order polynomial) in which the relationship between the pre-stored operation amount and the drive amount is reflected (S302). Then, the operation of the actuator is controlled according to the determined drive amount (S303). That is, the relationship between the user's operation amount and the drive amount of the actuator is stored, and then is resumed when the actuator is driven. The relationship between the operation amount and the drive amount is set or changed by the user through the input unit 104. That is, the corresponding information is input from the input unit and is stored in the specific storage of the control unit.

Fig. 4 is a graph explaining an input/output relationship for setting of an operational sensitivity according to an embodiment of the present invention.

As illustrated in Fig. 4, according to the present invention, the user can change the operational sensitivity by adjusting the positions of points "A" and "B" set by a manufacturer using the input unit. In this case, one or more points may be set according to the manufacturer, and the point set by the user is implemented in the control unit through approximate polynomial.

That is, according to the present invention, the user can define and change the relationship between the operation amount and the drive amount in at least first-order polynomial, one or more points can be set according to the manufacturer, and the point set by the user is implemented in the control unit through the approximate polynomial.

### INDUSTRIAL APPLICABILITY

As apparent from the above description, the present invention can be used in the apparatus for setting an operational sensitivity for construction equipment, which is so configured that a user can set the operational sensitivity according to an operation section of a proportional control operation device in the case where a proportional control type driving device is controlled using a proportional control type input device in the construction equipment, and thus the user can change the setting of the operational sensitivity according to an object mounted on the driving device or working conditions to improve the operation performance and to seek operator's convenience.

## Claims

1. An apparatus for setting an operational sensitivity for construction equipment **characterised by** comprising
an operation amount detection means (101) for detecting an operation amount of an operation lever; and
a control unit (102) to receive the operation amount detected by the operation amount detection means (101) and calculate a drive amount according to a relationship between a pre-stored operation amount and the drive amount, the drive amount being for operating an actuator;
the apparatus further comprising an input unit (104) setting or changing the relationship between the operation amount and the drive amount stored in the control unit (102) according to a user's key operation.

2. The apparatus for setting an operational sensitivity according to claim 1, further comprising a display unit (105) displaying the relationship between the operation amount and the drive amount on a screen in response to a request according to the user's key operation.

3. The apparatus for setting an operational sensitivity according to claim 2, wherein the relationship between the operation amount and the drive amount is changed by a user through moving a specified point on a line on which the operation amount and the drive amount, which are formed on the display unit (105), meet each other in the case of changing the relationship between the operation amount and the drive amount.

4. The apparatus for setting an operational sensitivity according to claim 3, wherein the relationship between the operation amount and the drive amount is changed by the user through defining the relationship between the operation amount and the drive amount in at least first-order polynomial.

5. The apparatus for setting an operational sensitivity according to claim 4, wherein maximum and minimum drive amounts and operation amounts are set, and the user is limited to set the relationship between the operation amount and the drive amount within a set input/output range.

## Patentansprüche

1. Eine Vorrichtung zum Einstellen einer Bedienempfindlichkeit für Baumaschinen, **dadurch gekennzeichnet, dass** dieselbe folgende Merkmale aufweist:
eine Bedienmengenerfassungseinrichtung (101) zum Erfassen einer Bedienmenge eines Bedienhebels; und
einer Steuereinheit (102) zum Empfangen der Bedienmenge, die durch die Bedienmengenerfassungseinrichtung (101) erfasst wird, und Berechnen einer Antriebsmenge gemäß einer Beziehung zwischen einer zuvor gespeicherten Bedienmenge und der Antriebsmenge, wobei die Antriebsmenge zum Betreiben eines Betätigungselements dient;
wobei die Vorrichtung ferner eine Eingabeeinheit (104) aufweist, die die Beziehung zwischen der Bedienmenge und der Antriebsmenge, die in der Steuereinheit (102) gespeichert ist, gemäß einer Tastenbedienung eines Benutzers einstellt oder verändert.

2. Die Vorrichtung zum Einstellen einer Bedienempfindlichkeit gemäß Anspruch 1, die ferner eine Anzeigeeinheit (105) aufweist, die die Beziehung zwischen der Bedienmenge und der Antriebsmenge auf einem Bildschirm ansprechend auf eine Anfrage gemäß der Tastenbedienung des Benutzers anzeigt.

3. Die Vorrichtung zum Einstellen einer Bedienempfindlichkeit gemäß Anspruch 2, bei der die Beziehung zwischen der Bedienmenge und der Antriebsmenge durch einen Benutzer durch ein Bewegen eines spezifischen Punkts auf einer Linie, auf der die Bedienmenge und die Antriebsmenge, die auf der Anzeigeeinheit (105) gebildet sind, einander treffen, in dem Fall eines Veränderns der Beziehung zwischen der Bedienmenge und der Antriebsmenge, verändert wird.

4. Die Vorrichtung zum Einstellen einer Bedienempfindlichkeit gemäß Anspruch 3, bei der die Beziehung zwischen der Bedienmenge und der Antriebsmenge durch den Benutzer durch ein Definieren der Beziehung zwischen der Bedienmenge und der Antriebsmenge in zumindest einem Polynom erster Ordnung verändert wird.

5. Die Vorrichtung zum Einstellen einer Bedienempfindlichkeit gemäß Anspruch 4, bei der eine maximale und minimale Antriebsmenge und Bedienmenge eingestellt sind und der Benutzer darauf eingeschränkt ist, die Beziehung zwischen der Bedienmenge und der Antriebsmenge innerhalb eines eingestellten Eingabe/Ausgabebereichs einzustellen.

## Revendications

1. Appareil pour établir une sensibilité de fonctionnement pour un engin de chantier, **caractérisé par le fait qu'**il comprend
un moyen de détection de quantité de fonctionnement (101) destiné à détecter une quantité de fonctionnement d'un levier d'actionnement; et
une unité de commande (102) destinée à recevoir la quantité de fonctionnement détectée par le moyen de détection de quantité de fonctionnement (101) et à calculer une quantité d'entraînement selon un rapport entre une quantité de fonctionnement pré-mémorisée et la quantité d'entraînement, la quantité d'entraînement étant pour actionner un actionneur;
l'appareil comprenant par ailleurs une unité d'entrée (104) établissant ou modifiant le rapport entre la quantité de fonctionnement et la quantité d'entraînement mémorisée dans l'unité de commande (102) selon un actionnement de la touche d'utilisateur.

2. Appareil pour établir une sensibilité de fonctionnement selon la revendication 1, comprenant par ailleurs une unité d'affichage (105) affichant le rapport entre la quantité de fonctionnement et la quantité d'entraînement sur un écran en réponse à une demande selon l'actionnement de la touche d'utilisateur.

3. Appareil pour établir une sensibilité de fonctionnement selon la revendication 2, dans lequel le rapport entre la quantité de fonctionnement et la quantité d'entraînement est modifiée par un utilisateur en déplaçant un point spécifié sur une ligne sur laquelle la quantité de fonctionnement et la quantité d'entraînement, qui sont formées sur l'unité d'affichage (105), coïncident l'une avec l'autre dans le cas d'une modification du rapport entre la quantité de fonctionnement et la quantité d'entraînement.

4. Appareil pour établir une sensibilité de fonctionnement selon la revendication 3, dans lequel le rapport entre la quantité de fonctionnement et la quantité d'entraînement est modifié par l'utilisateur en définissant le rapport entre la quantité de fonctionnement et la quantité d'entraînement dans au moins un polynôme de premier ordre.

5. Appareil pour établir une sensibilité de fonctionnement selon la revendication 4, caractérisé dans lequel les quantités maximales et minimales d'entraînement et les quantités de fonctionnement sont établies, et l'utilisateur est limité à établir le rapport entre la quantité de fonctionnement et la quantité d'entraînement dans une plage d'entrée/sortie établie.
